# EUROPÄISCHE PATENTSCHRIFT

(11) **EP 3 111 538 B1**
(45) Veröffentlichungstag und Bekanntmachung des Hinweises auf die Patenterteilung: **19.04.2023**
(21) Anmeldenummer: 14827235.4
(22) Anmeldetag: 29.12.2014
(51) Int. Cl.: H02K 5/10, H02K 11/00

(54) **ELEKTRISCHE MASCHINE MIT EINEM POLGEHÄUSE**
ELECTRIC MACHINE COMPRISING A POLE HOUSING
MACHINE ÉLECTRIQUE ÉQUIPÉE D'UN STATOR

(30) Priorität: 27.02.2014 DE 102014203542
(43) Veröffentlichungstag der Anmeldung: 04.01.2017
(73) Patentinhaber: Robert Bosch GmbH, 70442 Stuttgart (DE)
(72) Erfinder: MEYER, Christian, 76228 Karlsruhe-Wolfartsweier (DE); HANSEN, Sebastian, 77880 Sasbach (DE); PETERS, Markus, 77876 Kappelrodeck (DE); GMUEND, Torsten, 76437 Rastatt-Plittersdorf (DE); ACKER, Christian, F-67480 Leutenheim (FR)
(86) Internationale Anmeldenummer: PCT/EP2014/079381
(87) Internationale Veröffentlichungsnummer: WO 2015/128047

(56) Entgegenhaltungen:
- EP-A1- 1 878 824
- CN-Y- 200 944 543
- DE-A1-102011 002 992

## Beschreibung

### Stand der Technik

Die Erfindung geht aus von einer elektrischen Maschine mit einem Polgehäuse und einer Elektronik nach der Gattung des unabhängigen Anspruch. Zur Steuerung der elektrischen Maschine wird eine elektrische Platine mit einer enthaltenen Steuerschaltung verwendet.

Aus der FR 2 574 554 A1 ist eine elektrische Maschine bekannt, bei der eine elektrische Platine im gleichen Gehäuseinnenraum mit dem Lager und dem Stator sowie den Magneten und dem Rotor verbaut ist. Solch eine Anordnung von mechanischen und elektronischen Bauteilen in einem gemeinsamen Gehäuseinnenraum kann zu elektrischen Kurzschlüssen der Platine bzw. der elektronischen Bauteile führen. So können Schmutzpartikel wie Späne oder Kondenswasser z.B. Lötpunkte oder Pins von Bauteilen miteinander verbinden, was letztendlich zum Kurzschluss führt. Diese Nachteile werden durch die folgende Erfindung behoben.

DE 10 2011 002 992 A1 offenbart:
Elektrische Maschine mit einem Polgehäuse und einer Platine zur Steuerung der elektrischen Maschine, wobei die Platine an einer Flanschseite, die ein axiales Ende des Polgehäuses bildet, angeordnet ist, wobei zwischen der Platine und dem Polgehäuse eine separate Schutzwand angeordnet ist, wobei die Schutzwand die Platine vor losen Kleinteilen schützt, wobei in dem Polgehäuse mechanische Bauteile angeordnet sind, die wenigstens ein auf einer Welle angeordnetes Lager und einen Rotor, sowie einen Stator, in dem die Welle mit dem Lagern und dem Rotor konzentrisch angeordnet sind, aufweisen, wobei die Platine den mechanischen Bauteilen axial gegenüberliegt, und durch die separate Schutzwand von den Bauteilen getrennt ist.

### Offenbarung der Erfindung

Die erfindungsgemäße elektrische Maschine mit den Merkmalen des unabhängigen Anspruchs hat dem Stand der Technik gegenüber den Vorteil, dass die Platine durch eine separat gefertigte Schutzwand von mechanischen Bauteilen im Polgehäuse abgeschirmt ist. Die Schutzwand ist ein Bauteil für sich und nicht Bestandteil eines Gehäuses oder eines Lagerschildes oder einer Verschalteplatte. Dabei ist die Platine an einer Flanschseite des Polgehäuses angeordnet, damit die Platine und die zu steuernden Bauteile, z.B. die Spulen des Stators, möglichst auf kürzestem Weg verbunden werden können. Durch die Schutzwand zwischen der Platine und dem Polgehäuse wird verhindert, dass lose Kleinteile aus dem Polgehäuse die Platine berühren können. Solche Kleinteile können zum Beispiel leitende Metallstückchen, Schrauben, Schmutzpartikel, und sonstige leitende Kleinteile sein. In dem Polgehäuse ist wenigstens ein Rotor mit einer Welle, ein Stator, eine Verschalteplatte und Lager angeordnet. Auf der Welle sind die Lager und der Rotor angeordnet. In dem Stator ist der Rotor mit der Welle und den Lagern angeordnet. Der Stator umgibt konzentrisch den Rotor. An der Flanschseite ist die Verschalteplatte angeordnet. In einer axialen Stirnseite der Verschalteplatte ist eines der Lager in einem Lagersitz angeordnet. Die Platine ist außerhalb des Polgehäuses an der Flanschseite angeordnet, sodass die Platine den mechanischen Bauteilen axial gegenüberliegt, und durch die separate Schutzwand von den Bauteilen getrennt ist. Auf diese Weise sind die mechanischen Bauteile in dem Polgehäuse leicht durch eine Schutzwand zwischen Platine und Polgehäuse von der Platine zu trennen. Dennoch ermöglicht diese Anordnung z.B. ein Abgreifen eines Sensorsignals und die Ansteuerung von Statorspulen auf dem räumlich kürzesten Wege.

Durch die in den abhängigen Ansprüchen aufgeführten Maßnahmen sind vorteilhafte Weiterbildungen und Verbesserungen der im unabhängigen Anspruch angegebenen Vorrichtung möglich.

Es ist eine vorteilhafte Ausführungsform möglich, bei der die Schutzwand axial außerhalb des Polgehäuses auf der Flanschseite angeordnet ist. Auf diese Weise ist es möglich, die Schutzwand i Polgehäuse zu befestigen.

Es ist eine weitere Ausführungsform möglich, bei der die Schutzwand in dem Polgehäuse angeordnet ist. Dabei kann die Schutzwand in ihrer Gänze axial in dem Polgehäuse angeordnet sein. Es ist auch denkbar nur einen Teil der Schutzwand in dem Polgehäuse anzuordnen. Diese Ausführungsform bietet den Vorteil einer Bauraumersparnis, da so die axiale Länge der elektrischen Maschine vermindert werden kann.

Zweckmäßigerweise ist die Schutzwand formgemäß an der Flanschseite und an die im Polgehäuse gelagerten Teile angepasst, sodass sich näherungsweise die Kontur der Teile, wie z.B. der Verschalteplatte und deren Kontakte, an der Schutzwand abzeichnen. So kann sich die Schutzwand an die Form der Verschalteplatte und ihrer Kontaktierungen anschmiegen. Die formgemäß angepasste Schutzwand bildet näherungsweise die Bauteile an der Flanschseite ab. Die Schutzwand ist formschlüssig an das Ende des Polgehäuses und die mechanischen Bauteile anordenbar. Weiter ist eine optimale Abdichtung gegen Kleinteile aus dem Polgehäuse möglich, wenn sich die Schutzwand entsprechend der Form an der Flanschseite an die Bauteile anpasst. Auf diese Weise wird ebenfalls Bauraum gespart.

Vorteilhafterweise ist die Schutzwand eine geschlossene von einem Rand umsäumte Fläche. So weist die Schutzwand keine Ausnehmungen auf, die vom Rand beabstandet sind, sodass sie innerhalb der Fläche liegen. Auf diese Weise ist es möglich, das Innere des Polgehäuses vollständig gegenüber der Platine abzuschirmen. Dadurch wird ein möglichst hoher Schutz der Platine gewährleistet.

Es ist eine weitere Ausführungsform denkbar, die auf vorteilhafter Weise eine Durchführung für die Welle in der Schutzwand aufweist. Die Durchführung wird von einer Randung umsäumt. Zu der Durchführung für die Welle können noch weitere Durchführungen ausgebildet werden, die für Ansteuerleitungen und/oder Sensorleitungen genutzt werden können. Die Durchführung für die Welle sitzt vorzugsweise mittig in der Schutzwand. Grundsätzlich sind verschiedene Formen für die Durchführung möglich. Vorzugsweise ist die Durchführung der Form der durchzuführenden Bauteile entsprechend geformt. Für eine Welle ist die Durchführung beispielsweise kreisförmig. Diese Ausführungsform führt ebenfalls zur Bauraumeinsparung.

Damit die vorteilhafte Wirkung der Schutzwand zum Tragen kommt, muss ein radial äußerer Rand der Schutzwand axial an der Verschalteplatte dicht anliegen, sodass keine Kleinteile zwischen Schutzwand und Verschalteplatte hindurchtreten können. Ebenso muss im Falle einer Durchführung für die Welle in der Schutzwand die Randung der Durchführung an dem auf der Welle angeordneten Lager axial dicht anliegen.

Vorteilhafter Weise weist die Verschalteplatte einen axialen Fortsatz auf der Stirnseite auf. Der Fortsatz erstreckt sich in axialer Richtung von der Verschalteplatte weg. Weiter weist die Verschalteplatte radial außen neben dem Fortsatz eine Ausnehmung auf, die vorzugsweise an dem Fortsatz angrenzt. Die Ausnehmung erstreckt sich axial in die Verschalteplatte und somit in entgegengesetzter Richtung des Fortsatzes. Der Fortsatz und die Ausnehmung erstrecken sich entlang der Umfangsrichtung der Verschalteplatte. Vorzugsweise erstrecken sie sich auf vollem Umfang der Verschalteplatte, sodass der Fortsatz und die Ausnehmung in Umfangsrichtung geschlossen sind. An dem Fortsatz liegt ein sich radial nach innen erstreckender, an den Rand angrenzender Bereich der Schutzwand an. In die Ausnehmung greift der Rand der Schutzwand ein. In Endposition der Schutzwand ist der Rand in der Ausnehmung angeordnet, dabei zeichnet sich die Endposition dadurch aus, dass die Schutzwand bei einer betriebsbereiten elektrischen Maschine fertig montiert ist und Kleinteile zuverlässig abschirmt. Auf diese Weise wird der Bereich des Randes der Schutzwand zwischen der Ausnehmung und dem Fortsatz verspannt, oder wenigstens mehrfach durch die Verschalteplatte berührt. Dadurch entsteht eine hohe Abdichtung zwischen der Verschalteplatte und der Schutzwand.

Ein schnelles und kostengünstiges Befestigen der Schutzwand an einem mechanischen Bauteil der elektrischen Maschine oder an dem Polgehäuse wird ohne zusätzliche Werkstoffe zu verwenden verschweißt, wie Ultraschallschweißen, erreicht. Das Polgehäuse kann dabei aus Metall oder Kunststoff bestehen.

Eine weitere schnelle und kostengünstige Weise die Schutzwand zwischen der Platine und dem Polgehäuse zu befestigen, ist durch die Verwendung von Schrauben oder Nieten gegeben. Es ist auch möglich, die Schutzwand mittels eines Clipverschlusses an dem Polgehäuse oder an einem Bauteil, das in dem Polgehäuse gelagert ist, zu befestigen. Zudem ist es möglich einen Klebstoff zur Befestigung der Schutzwand zu verwenden.

Die Schutzwand ist aus einem Kunststoff, vorzugsweise Polyamid 66 (Pa66), gefertigt. Dies lässt eine Serienkonstruktion auf kostengünstige Weise zu. Es ist auch denkbar, die Schutzwand aus einem Metall herzustellen, z.B. einem Stahl oder einem Aluminiumblech.

Die erfindungsgemäße Schutzwand kann vorteilhafter Weise mit einer Haftschicht versehen werden. Die Haftschicht dient dazu, die Kleinteile zu binden, die sich im Inneren des Polgehäuses in Richtung der Platine bewegen. So können Kurzschlüsse nicht nur durch eine Abschottung der Platine durch die Schutzwand vermieden werden, sondern auch durch das Anhaften von leitenden Kleinteilen an der Schutzwand. Die Haftschicht ist vorzugsweise auf der den mechanischen Bauteilen zugewandten Seite der Schutzwand angeordnet. Dabei enthält die Haftschicht einen Klebstoff, der vorzugsweise eine Vergussmasse ist. Auf diese Weise kann eine günstige Serienproduktion gewährleistet werden.

Die erfindungsgemäße Haftschicht enthält wenigstens zu Anteilen Naturkautschuk und/oder Synthesekautschuk und/oder Acrylate. Das gewährleistet einen dauerhaften Hafteffekt.

Die elektrische Maschine findet Verwendung als Verstellantrieb in einem Automobil zum Beispiel als Fensterheber, Sonnendachantrieb, Kofferraumklappenantrieb und/oder Antrieb einer Getriebeschaltmechanik. Durch die erfindungsgemäße elektrische Maschine wird ein sicherer und dauerhafter Betrieb der zu verstellenden Komponenten bspw. in einem Motorraum gewährleistet.

### Kurze Beschreibung der Zeichnungen

Ein Ausführungsbeispiel der Erfindungen ist in der Zeichnung dargestellt und in der nachfolgenden Beschreibung näher erläutert. Es zeigt:

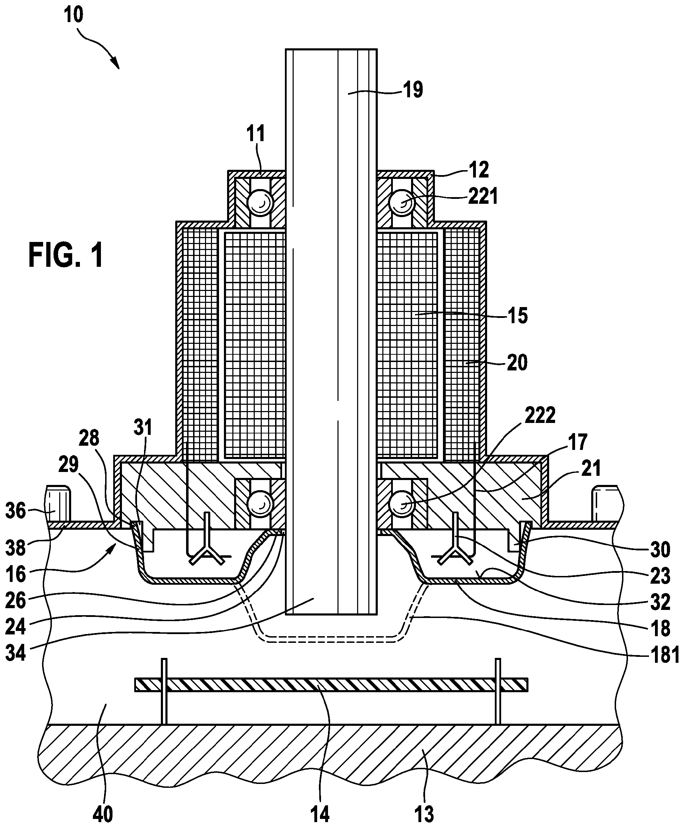

Figur 1 einen axialen Querschnitt durch eine erfindungsgemäße elektrische Maschine mit einer Schutzwand.

### Ausführungsform der Erfindung

In Figur 1 ist eine elektrische Maschine 10 gezeigt. Die elektrische Maschine 10 weist ein Polgehäuse 12 auf. In dem Polgehäuse 12 sind Bauteile 25 angeordnet, wobei die Bauteile 25 einen Stator 20 mit Spulen, einen Rotor 15 mit einer Rotorwelle 19, eine Verschalteplatte 21 und zwei Lager 221, 222 umfassen. Die Bauteile 25 sind konzentrisch zueinander im Polgehäuse 12 angeordnet. Dabei ist der Stator 20 im Polgehäuse 12 so angeordnet, dass der Stator 20 das Polgehäuse 12 unmittelbar berührt. Weiter ist der Stator 20 vollständig seiner axialen Länge nach im Polgehäuse 12 eingefügt, sodass der Stator 20 axial nicht aus dem Polgehäuse 12 herausragt. Die Lager 221, 222 und der Rotor 15 sind auf der Rotorwelle 19 angeordnet, wobei der Rotor 15 zwischen den beiden Lagern 221, 222 angeordnet ist. Die Rotorwelle 19 ist von dem Rotor 15 konzentrisch umgeben. Die Rotorwelle 19 ragt aus dem Polgehäuse 12 an einer Abtriebsseite 11 heraus. An der Abtriebsseite 11 ist eines der beiden Lager 221 angeordnet. Das Lager 221 ist in einem Polgehäuseteil angeordnet, das den gleichen Durchmesser aufweist wie der Außendurchmesser des Lagers 221. Der Rotor 15 ist im eingebauten Zustand von dem Stator 20 konzentrisch umgeben.

Der Stator 20 ist fest mit dem Polgehäuse 12 verbunden. An einer axial der Abtriebsseite 11 gegenüberliegenden Flanschseite 16 des Polgehäuses 12 ist die Verschalteplatte 21 angeordnet. Die Verschalteplatte 21 weist eine Durchführung für die Rotorwelle 19 auf. Die Verschalteplatte 21 ist zwischen dem Lager 222 und dem Rotor 15 angeordnet. Die Verschalteplatte 21 ist konzentrisch zur Rotorwelle 19 angeordnet. Der Gehäuseabschnitt auf der Flanschseite 16, in dem die Verschalteplatte 21 gelagert ist, weist den gleichen Durchmesser auf, wie der Außendurchmesser der Verschalteplatte 21. In der Verschalteplatte 21 ist das zweite der beiden Lager 222 angeordnet. Die Verschalteplatte 21 ist fest mit dem Polgehäuse 12, z.B. durch Einpressen oder Kleben, verbunden und bildet somit ein Lagerschild für die Rotorwelle 19. In der Verschalteplatte 21 sind Kontakte 23 angeordnet, die an einer axial gerichteten Stirnseite 33 der Verschalteplatte 21 kontaktierbar sind. Die Stirnseite 33 bildet die Seite der Verschalteplatte 21, welche quer zur Rotorwelle 19 gerichtet und vom Stator 20 abgewandt ist. Von den Spulen des Stators 20 werden Drähte 17 weggeführt. Die Drähte werden an der Verschalteplatte 21 vorbei und/oder durch die Verschalteplatte 21 hindurchgeführt, um dann mit den Kontakten 23 verbunden zu werden. Diese Verbindung wird durch Schweißen oder Löten erzeugt.

An der Verschalteplatte 21 ist ein Fortsatz 30 angeformt. Der Fortsatz 30 befindet sich auf der Stirnseite 33 der Verschalteplatte 21. Der Fortsatz 30 ist am radial äußeren Bereich der Stirnseite 33 der Verschalteplatte 21 angeordnet. Dabei ist der Fortsatz 30 axial vom Stator 20 abgewandt. Der Fortsatz 30 erstreckt sich bezüglich des Stators 20 axial in entgegengesetzter Richtung. Weiter erstreckt sich der Fortsatz 30 in Umfangsrichtung der Verschalteplatte 21. So bildet der Fortsatz 30 vorzugsweise einen kreisförmig - vorzugsweise geschlossenen- Bund auf der Stirnseite 33 der Verschalteplatte 21.

Radial außen neben dem Fortsatz 30 ist auf der Stirnseite 33 eine Ausnehmung 31 angeordnet. Die Ausnehmung 31 erstreckt sich axial in die Verschalteplatte 21. Die Ausnehmung 31 erstreckt sich entlang der Umfangsrichtung der Verschalteplatte 21, so dass die Ausnehmung 31 geschlossen ringförmig ist.

An der axialen Flanschseite 16 des Polgehäuses 12 ist eine Schutzwand 18 angeordnet. Die Schutzwand 18 liegt dabei wenigstens an der Verschalteplatte 21 an. Dazu greift ein radial äußerer Rand 28 der Schutzwand 18 in die Ausnehmung 31 ein, sodass der Rand 28 in seiner Endposition in der Ausnehmung 31 angeordnet ist. Die betriebsbereite elektrische Maschine 10 weißt solch eine fertig montierte Schutzwand 18 in Endposition auf. Weiter liegt ein sich radial nach innen erstreckender Bereich 29 der an den Rande 28 angrenzt an dem Fortsatz 30 an. Auf diese Weise ist die Schutzwand 18 fixiert, da der Rand 28 und sein Bereich 29 durch die Ausnehmung 31 und den Fortsatz 30 verspannt sind. Hierzu liegt der Rand 28 in der Ausnehmung 31 an ihrer radial außen angeordneten Wandung an. Auf diese Weise bleibt ein Teil am äußersten Bereich der Verschalteplatte 21 von der Schutzwand 18 unbedeckt.

Die Schutzwand 18 weist eine Durchführung 24 in ihrer Mitte auf. Die Durchführung 24 weist ein Randung 26 auf. Die Randung 26 liegt an dem zweiten Lager 222 an. Dabei liegt die Schutzwand 18 dicht auf dem Lager 222 an. Die Welle 19 ragt aus der Durchführung 24 heraus. Auf diese Weise ist das herausragende Ende 34 der Welle 19 nicht von der Schutzwand 22 bedeckt. Es ist eine weitere Ausführungsform denkbar, bei der eine Schutzwand 181 keine Durchführung 24 aufweist. Auf diese Weise weist die Schutzwand 181 eine Fläche ohne Löcher auf, sodass das Ende 34 der Welle 19 von der Schutzwand 181 abgedeckt ist. Somit sind alle Bauteile 25 durch die Schutzwand 181 von der Platine 14 abgeschirmt. Dies ist in der Figur 1 durch die gestrichelte Linie dargestellt. Die Schutzwand 18, 181 ist formgemäß an die Kontur der Verschalteplatte 21 sowie deren Kontakte 23 und dem Lager 222 sowie der Welle 19 angepasst. So schmiegt sich die Schutzwand 18, 181 an der Verschalteplatte 21 und den Kontakten 23 an der Flanschseite 16 an, sodass sich deren Kontur wenigstens annähernd an der Schutzwand 22 abzeichnet.

Die Schutzwand 18, 181 weist auf ihrer zum Innern des Polgehäuses 12 gewandten Seite eine Haftschicht 32 auf. Die Haftschicht 32 ist vorzugsweise als Film ausgebildet. Die Haftschicht 32 ist in einer weiteren Ausführungsform beidseitig auf der Schutzwand 18 angebracht. Der Film enthält bspw. Naturkautschuk oder Synthesekautschuk oder Acrylat. Es ist eine Ausführungsvariante möglich, bei der die Haftschicht 32 als Vergussmasse auf die Schutzwand 18, 181 aufgebracht werden. Sie wird als Vergussmasse entweder mittels eines Pinsels oder Spachtels verstrichen oder durch die Schwerkraft verteilt, indem man die Schutzwand 22 in verschiedenen Lagen positioniert, sodass die Vergussmasse zerfließt und die Schutzwand 22 bedeckt.

Axial neben der Flanschseite 16 ist die Platine 14 angeordnet. Vorzugsweise erstreckt sich die Platine 14 quer zur Axialrichtung 39 der Polgehäuses 12. Die Platine 14 ist an einem Kühlkörper 13 befestigt. Der Kühlkörper 13 ist axial neben der Platine angeordnet. Die Platine 14 liegt zwischen den Kühlkörper 13 und dem Polgehäuse 12. Zwischen der Platine 14 und dem Polgehäuse 12 ist die Schutzwand 18, 181 befestigt. Der Kühlkörper 13 ist auf einem Motorgehäuse 37 angeordnet, wobei das Motorgehäuse 37 mittels Befestigungsmitteln 36 an dem Polgehäuse 12 befestigt ist. Der Kühlkörper 13 kann auch als integraler Bestandteil des Motorgehäuses 37 ausgebildet sein. Dafür ist ein Befestigungsbund 38 an dem Polgehäuse 12 vorgesehen. Der Befestigungsbund 38 befindet sich an der Flanschseite 16 des Polgehäuses 12. Dabei ist der Befestigungsbund 38 radial außen an dem Polgehäuse 12 angebracht. Der Befestigungsbund 38 erforderlich sich vorzugsweise quer zur Axialrichtung des Polgehäuses 12. Vorzugsweise umgreifen die Befestigungsmittel 36 den Befestigungsbund 38. So bilden der Kühlkörper 13, das Motorgehäuse 37, das Befestigungsmittel 36, der Befestigungsbund 38 und die Schutzwand 18, 181 einen geschlossenen Raum 40, in dem die Platine 14 angeordnet ist. Der Raum 40 ist von seiner Umgebung und von dem Inneren des Polgehäuses 12 dicht bezüglich Staubs, Späne Schmutz und andere Kleinteile abgetrennt.

Die elektrische Maschine 10 mit der erfindungsgemäßen Schutzwand 18 findet vorzugsweise Anwendung in Kraftfahrzeugen, insbesondere für das Verstellen von Sonnendächern, Fensterhebern, Heckklappen und Sitzen. Weiter wird die erfindungsgemäße elektrische Maschine 10 als Stellantrieb in Getriebestellern verwendet. Die elektrische Maschine 10 ist jedoch nicht auf solch eine Anwendung beschränkt.

## Patentansprüche

1. Elektrische Maschine (10) mit einem Polgehäuse (12) und einer Platine (14) zur Steuerung der elektrischen Maschine (10), wobei die Platine (14) an einer Flanschseite (16), die ein axiales Ende des Polgehäuses (12) bildet, angeordnet ist,
wobei zwischen der Platine (14) und dem Polgehäuse (12) eine separate Schutzwand (18) angeordnet ist, wobei die Schutzwand (18) die Platine (14) vor losen Kleinteilen schützt, wobei in dem Polgehäuse (12) mechanische Bauteile (25) angeordnet sind, die wenigstens ein auf einer Welle (19) angeordnetes Lager (221, 222) und einen Rotor (15), sowie einen Stator (20), in dem die Welle (19) mit den Lagern (221, 222) und dem Rotor (15) konzentrisch angeordnet sind, und eine an der Flanschseite (16) angeordnete Verschalteplatte (21) umfassen, wobei in der Verschalteplatte ein Lager (222) angeordnet ist, und die Platine (14) den mechanischen Bauteilen (25) axial gegenüberliegt, und durch die separate Schutzwand (18) von den Bauteilen (25) getrennt ist.

2. Elektrische Maschine (10) nach Anspruch 1, **dadurch gekennzeichnet, dass** die Schutzwand (18) axial außerhalb des Polgehäuses (12) angeordnet ist.

3. Elektrische Maschine (10) nach Anspruch 1, **dadurch gekennzeichnet, dass** die Schutzwand (18) im Polgehäuses (12) angeordnet ist.

4. Elektrische Maschine (10) nach Anspruch 1, **dadurch gekennzeichnet, dass** die Schutzwand (18) formgemäß an der Flanschseite (16) der Verschalteplatte (21) angepasst ist.

5. Elektrische Maschine (10) nach einem der vorherigen Ansprüche, **dadurch gekennzeichnet, dass** die Schutzwand (18, 181) keine Löcher aufweist.

6. Elektrische Maschine (10) nach einem der Ansprüche 1 bis 4, **dadurch gekennzeichnet, dass** die Schutzwand (18) wenigstens eine Durchführung (24) für die Welle (19) aufweist, wobei vorzugsweise die Durchführung (24) mittig in der Schutzwand (18) angeordnet ist.

7. Elektrische Maschine (10) nach Anspruch 6, **dadurch gekennzeichnet, dass** eine Randung (26) der Durchführung (24) an dem Lager (222), welches in der Verschalteplatte (21) angeordnet ist, und ein radial äußerer Rand (28) der Schutzwand (18) an der Verschalteplatte (21) anliegt.

8. Elektrische Maschine (10) nach einem der vorherigen Ansprüche, **dadurch gekennzeichnet, dass** die Verschalteplatte (21) einen axialen Fortsatz (30) umfasst, wobei radial außen an dem Fortsatz (30) angrenzend eine axiale Ausnehmung (31) angeordnet ist, wobei sich der Fortsatz (30) und die Ausnehmung (31) entlang der Umfangsrichtung der Verschalteplatte (21) erstrecken, wobei die Schutzwand (18) mit einem Bereich (29) ihres Randes (28) an dem Fortsatz (30) der Verschalteplatte (21) anliegt, und in die Ausnehmung (31) ragt.

9. Elektrische Maschine (10) nach einem der vorherigen Ansprüche, **dadurch gekennzeichnet, dass** die Schutzwand (18) an einem mechanischen Bauteil (20, 21, 221) der elektrischen Maschine (10) oder an dem Polgehäuse (12) mittels zusatzwerkstofflosen Schweißens, wie Ultraschallschweißen, oder mittels Klebens befestigt ist.

10. Elektrische Maschine (10) nach einem der vorherigen Ansprüche, **dadurch gekennzeichnet, dass** die Schutzwand (18) durch einen Clipverschluss oder durch Schrauben befestigt ist.

11. Elektrische Maschine (10) nach einem der vorherigen Ansprüche, **dadurch gekennzeichnet, dass** die Schutzwand (18) aus einem Kunststoff -vorzugsweise PA 66- besteht.

12. Elektrische Maschine (10) nach einem der vorherigen Ansprüche, **dadurch gekennzeichnet, dass** die Schutzwand (18) mit einer Haftschicht (32) versehen ist, wobei die Haftschicht (32) auf der gegenüberliegenden Seite bezüglich der Platine (14) angeordnet ist, und die Haftschicht (32) einen Klebstoff enthält, der vorzugsweise eine Vergussmasse ist.

13. Elektrische Maschine (10) nach Anspruch 12, **dadurch gekennzeichnet, dass** die Haftschicht (32) Natur-, Synthesekautschuke und/oder Acrylate enthält.

14. Verwendung einer elektrischen Maschine (10) nach einem der vorherigen Ansprüche, wobei die elektrische Maschine (10) zum Verstellen beweglicher Teile in einem Kfz-Motorraum oder als Verstellantrieb für z.B. Fensterheber, Sonnendachantrieb, Kofferraumklappenantrieb und/oder Antriebs einer Getriebeschaltemechanik verwendet wird.

## Claims

1. Electric machine (10) comprising a pole housing (12) and a circuit board (14) for controlling the electric machine (10), wherein the circuit board (14) is arranged on a flanged side (16) which forms an axial end of the pole housing (12),
wherein a separate protective wall (18) is arranged between the circuit board (14) and the pole housing (12), wherein the protective wall (18) protects the circuit board (14) from loose small parts, wherein mechanical components (25), which comprise at least one bearing (221, 222) arranged on a shaft (19) and a rotor (15) and a stator (20), in which the shaft (19) is arranged concentrically with the bearings (221, 222) and the rotor (15), and an interconnection plate (21) arranged on the flanged side (16), are arranged in the pole housing (12), wherein a bearing (222) is arranged in the interconnection plate, and the circuit board (14) is located axially opposite the mechanical components (25) and is separated from the components (25) by the separate protective wall (18).

2. Electric machine (10) according to Claim 1, **characterized in that** the protective wall (18) is arranged axially outside the pole housing (12).

3. Electric machine (10) according to Claim 1, **characterized in that** the protective wall (18) is arranged in the pole housing (12).

4. Electric machine (10) according to Claim 1, **characterized in that** the shape of the protective wall (18) is matched to the flanged side (16) of the interconnection plate (21).

5. Electric machine (10) according to one of the preceding claims, **characterized in that** the protective wall (18, 181) has no holes.

6. Electric machine (10) according to one of Claims 1 to 4, **characterized in that** the protective wall (18) has at least one aperture (24) for the shaft (19), the aperture (24) preferably being arranged centrally in the protective wall (18).

7. Electric machine (10) according to Claim 6, **characterized in that** an edge (26) of the aperture (24) rests on the bearing (222) which is arranged in the interconnection plate (21), and a radially outer edge (28) of the protective wall (18) rests on the interconnection plate (21).

8. Electric machine (10) according to one of the preceding claims, **characterized in that** the interconnection plate (21) comprises an axial extension (30), wherein an axial recess (31) is arranged radially externally adjacent to the extension (30), wherein the extension (30) and the recess (31) extend along the circumferential direction of the interconnection plate (21), wherein the protective wall (18) rests with a region (29) of its edge (28) on the extension (30) of the interconnection plate (21) and protrudes into the recess (31) .

9. Electric machine (10) according to one of the preceding claims, **characterized in that** the protective wall (18) is fixed to a mechanical component (20, 21, 221) of the electric machine (10) or to the pole housing (12) by means of welding without additional material, such as ultrasonic welding, or by means of adhesive bonding.

10. Electric machine (10) according to one of the preceding claims, **characterized in that** the protective wall (18) is fixed by a clip fastener or by screws.

11. Electric machine (10) according to one of the preceding claims, **characterized in that** the protective wall (18) consists of a plastic - preferably PA 66.

12. Electric machine (10) according to one of the preceding claims, **characterized in that** the protective wall (18) is provided with an adhesive layer (32), wherein the adhesive layer (32) is arranged on the opposite side with respect to the circuit board (14) and the adhesive layer (32) contains an adhesive, which is preferably a potting compound.

13. Electric machine (10) according to Claim 12, **characterized in that** the adhesive layer (32) contains natural rubbers, synthetic rubbers and/or acrylates.

14. Use of an electric machine (10) according to one of the preceding claims, wherein the electric machine (10) is used for adjusting movable parts in a motor vehicle engine compartment or as an adjustment drive for, for example, window lifters, a sunroof drive, a luggage compartment lid drive and/or a drive of a transmission selector mechanism.

## Revendications

1. Machine électrique (10) avec une boîte à bornes (12) et une platine (14) pour la commande de la machine électrique (10), la platine (14) étant agencée sur un côté de bride (16) qui forme une extrémité axiale de la boîte à bornes (12), une paroi de protection séparée (18) étant agencée entre la platine (14) et la boîte à bornes (12), la paroi de protection (18) protégeant la platine (14) de petites pièces détachées, des composants mécaniques (25) étant agencés dans la boîte à bornes (12), qui comprennent au moins un palier (221, 222) agencé sur un arbre (19) et un rotor (15), ainsi qu'un stator (20) dans lequel l'arbre (19) avec les paliers (221, 222) et le rotor (15) sont agencés de manière concentrique, et une plaque d'interconnexion (21) agencée sur le côté de bride (16), un palier (222) étant agencé dans la plaque d'interconnexion, et la platine (14) se trouvant axialement à l'opposé des composants mécaniques (25), et étant séparée des composants (25) par la paroi de protection séparée (18).

2. Machine électrique (10) selon la revendication 1, **caractérisée en ce que** la paroi de protection (18) est agencée axialement à l'extérieur de la boîte à bornes (12) .

3. Machine électrique (10) selon la revendication 1, **caractérisée en ce que** la paroi de protection (18) est agencée dans la boîte à bornes (12).

4. Machine électrique (10) selon la revendication 1, **caractérisée en ce que** la paroi de protection (18) est adaptée à la forme du côté de bride (16) de la plaque d'interconnexion (21).

5. Machine électrique (10) selon l'une quelconque des revendications précédentes, **caractérisée en ce que** la paroi de protection (18, 181) ne présente pas de trous.

6. Machine électrique (10) selon l'une quelconque des revendications 1 à 4, **caractérisée en ce que** la paroi de protection (18) présente au moins un passage (24) pour l'arbre (19), le passage (24) étant de préférence agencé au centre de la paroi de protection (18).

7. Machine électrique (10) selon la revendication 6, **caractérisée en ce qu'**une bordure (26) du passage (24) s'applique sur le palier (222), qui est agencé dans la plaque d'interconnexion (21), et un bord radialement extérieur (28) de la paroi de protection (18) s'applique sur la plaque d'interconnexion (21).

8. Machine électrique (10) selon l'une quelconque des revendications précédentes, **caractérisée en ce que** la plaque d'interconnexion (21) comprend un prolongement axial (30), un évidement axial (31) étant agencé radialement à l'extérieur de manière adjacente au prolongement (30), le prolongement (30) et l'évidement (31) s'étendant le long de la direction circonférentielle de la plaque d'interconnexion (21), la paroi de protection (18) s'appliquant par une zone (29) de son bord (28) sur le prolongement (30) de la plaque d'interconnexion (21), et faisant saillie dans l'évidement (31).

9. Machine électrique (10) selon l'une quelconque des revendications précédentes, **caractérisée en ce que** la paroi de protection (18) est fixée à un composant mécanique (20, 21, 221) de la machine électrique (10) ou à la boîte à bornes (12) au moyen d'un soudage sans métal d'apport, tel qu'un soudage par ultrasons, ou au moyen d'un collage.

10. Machine électrique (10) selon l'une quelconque des revendications précédentes, **caractérisée en ce que** la paroi de protection (18) est fixée par une fermeture à clip ou par des vis.

11. Machine électrique (10) selon l'une quelconque des revendications précédentes, **caractérisée en ce que** la paroi de protection (18) est constituée d'une matière plastique, de préférence du PA 66.

12. Machine électrique (10) selon l'une quelconque des revendications précédentes, **caractérisée en ce que** la paroi de protection (18) est pourvue d'une couche adhésive (32), la couche adhésive (32) étant agencée sur le côté opposé par rapport à la platine (14), et la couche adhésive (32) contenant un adhésif, qui est de préférence une masse de scellement.

13. Machine électrique (10) selon la revendication 12, **caractérisée en ce que** la couche adhésive (32) contient des caoutchoucs naturels, des caoutchoucs synthétiques et/ou des acrylates.

14. Utilisation d'une machine électrique (10) selon l'une quelconque des revendications précédentes, dans laquelle la machine électrique (10) est utilisée pour le réglage de pièces mobiles dans un compartiment moteur de véhicule automobile ou en tant qu'entraînement de réglage pour p. ex. un lève-vitre, entraînement de toit ouvrant, entraînement de couvercle de coffre à bagages et/ou entraînement d'un mécanisme de changement de vitesse.
